# EUROPEAN PATENT APPLICATION

(11) **EP 4 779 467 A1**
(43) Date of publication of application: **22.07.2026**
(21) Application number: 26150294.2
(22) Date of filing: 05.01.2026
(51) Int. Cl.: G06F 9/451, G06F 9/54, G06F 3/14, H04L 67/02

(54) **CROSS-PLATFORM MAPPING AND INTERACTION METHOD AND SYSTEM OF RUNNING WINDOW OF SOFTWARE PLATFORM**

(30) Priority: 17.01.2025 CN 202510076097; 15.04.2025 CN 202510465550
(71) Applicant: SHANGHAI TOSUN TECHNOLOGY LTD, Shanghai 201804 (CN)
(72) Inventor: Liu, Chu, Shanghai (CN); Xie, Yueyin, Shanghai (CN); Mo, Mang, Shanghai (CN)
(74) Representative: Sun, Yanan

(57) **Abstract**

A cross-platform mapping and interaction method of a running window of a software platform includes: an independent service process is constructed at a server side, and the service process provides an HTTP service; the service process performs real-time communication with at least one software process to obtain relevant information of the running window in the software process; the service process sets a screen shot buffer zone for the running window to store a screen shot image of the running window, and sends the screen shot image to a client so that the screen shot image is displayed and published by a webpage at the client; when the screen shot image is triggered, the service process obtains a trigger behavior through the client and generates corresponding operation instructions to the software process, so that the software process performs an operation of the running window corresponding to the screen shot image.

## Description

### CROSS-REFERENCE TO THE RELATED APPLICATIONS

This application is based upon and claims priority to Chinese Patent Application No. 202510076097.2 filed on January 17, 2025, and Chinese Patent Application No. 202510465550.9 filed on April 15, 2025, the entire contents of which are incorporated herein by reference.

### TECHNICAL FIELD

The present disclosure relates to software deployment technologies and in particular to a cross-platform mapping and interaction method and system of a running window of a software platform.

### BACKGROUND

The modern software platforms usually include multiple functional windows and user interfaces with different permissions. When joint simulation tasks are executed, the software platforms need to embed an interface of a joint simulation software into a sub-window of the platforms so as to realize unified management over these software life cycles. Besides, multiple users need to access the windows of the software platform through different platforms to perform different operations, such as viewing test reports by smart phone, modifying simulation model parameters by laptop computer, and modifying calibration parameters by on-board computer and the like. This requires the software platform to map and operate multiple windows at the same time on different platforms.

The current mainstream solution is to allow, by using a general remote control software, users to log onto the computer bearing the software platform remotely for viewing and operation. But this solution has the following disadvantages.
1. The logging requires the running window of the software platform to be in display state and display on top: this requirement leads the running window of the software platform to exclusively occupy the display, blocking other software running on desktop and affecting users' experience.
2. Interference of multiple users logging at the same time: in a case of multiple users logging at the same time, mutual interference occurs among mouse and keyboard operations of the computers, leading to erroneous input of data and further affecting working efficiency and accuracy.
3. Remote control requires unlocking of the computer: the use of remote software usually requires the computer to be in unlocked state, which increases the risk of data leakage and lowers the platform safety.
4. Permission cannot be divided: there are multiple windows with different permissions in the software platform. In the prior arts, it is impossible to effectively assign a different permission to each user, leading to permission conflict and potential safety hazard in the operations of users.

Therefore, there is a technical problem of failure to display and operate any running window across platforms by the conventional software platform in the prior arts.

It is to be understood that the information disclosed above in this background section is provided solely for the purpose of understanding the background of the present disclosure and shall not be construed as prior art.

### SUMMARY

The object of the present disclosure is to provide a cross-platform mapping and interaction method and system of a running window of a software platform.

**In** order to solve the above technical problem, the present disclosure provides a cross-platform mapping and interaction method of a running window of a software platform, including the following:
an independent service process is constructed at a server side, and the service process provides HyperText Transfer Protocol (HTTP) service;
the service process performs real-time communication with at least one software process to obtain relevant information of the running window in the software process;
the service process sets a screen shot buffer zone for the running window to store a screen shot image of the running window, and sends the screen shot image of the running window to a client so that the screen shot image of the running window is displayed and published by a webpage at the client;
when the screen shot image displayed by the webpage is triggered, the service process obtains a trigger behavior through the client and generates corresponding operation instructions to the software process, so that the software process performs an operation of the running window corresponding to the screen shot image.

In another aspect, the present disclosure provides a cross-platform mapping and interaction system of a running window of a software platform, including: a first computer device and a second computer device, wherein,
the first computer device is configured to include:
a software process;
a service process, configured to provide HyperText Transfer Protocol (HTTP) service and perform real-time communication with at least one software process to obtain relevant information of the running window in the software process; wherein,
the service process sets a screen shot buffer zone for the running window to store a screen shot image of the running window, and sends the screen shot image of the running window to a client so that the screen shot image of the running window is displayed and published by a webpage at the client;
when the screen shot image displayed by the webpage is triggered, the service process obtains a trigger behavior through the client and generates corresponding operation instructions to the software process, so that the software process performs an operation of the running window corresponding to the screen shot image; and,
the second computer device is configured to include:
   a client, configured to receive the screen shot image of the running window from the service process to display and publish the screen shot image by the webpage and send the trigger behavior of the screen shot image displayed by the webpage to the service process.

In a third aspect, the present disclosure provides a non-transitory computer-readable storage medium including instructions which, when executed by a processor, cause the processor to perform the foregoing cross-platform mapping and interaction method.

In a fourth aspect, the present disclosure provides an electronic device, including:
a non-transitory computer-readable storage medium;
a processor;
wherein the non-transitory computer-readable storage medium stores instructions which, when executed by the processor, cause the processor to perform the foregoing cross-platform mapping and interaction method.

In a fifth aspect, the present disclosure provides a computer program product embodied in a non-transitory computer-readable storage medium, including instructions which, when executed by a processor, cause the processor to perform the foregoing cross-platform mapping and interaction method.

The present disclosure has the following beneficial effects. In the cross-platform mapping and interaction method and system of the running window of the software platform of the present disclosure, the technical problem of failure to display and operate any running window across platforms by the conventional software platform is solved. The new functional running window designed in the software platform can be remotely shared and controlled without secondary development. In this method, the users can access a specific function of the software platform via any terminal such as smart phone, tablet computer and working computer and the like. Those terminals as clients can participate in the control of the running window of corresponding function of the software platform without the running window in the software platform being in a display state or in a foreground display, as long as there is a browser, effectively improving the convenience and consistency of function access of the software platform.

Additional features and advantages of the present disclosure will be described in the following specification, and some of these will become apparent from the specification or be understood through the practice of the present disclosure. The objectives and other advantages of the present disclosure are achieved and obtained through the structures specifically outlined in the specification and drawings.

To make the above objects, features, and advantages of the present disclosure clearer and more understandable, the present disclosure will be described in detail below with reference to the preferred embodiments and drawings.

### BRIEF DESCRIPTION OF THE DRAWINGS

In order to more clearly describe the technical solutions in the embodiments of the present disclosure or in the prior arts, the drawings required for descriptions of the specific embodiments or the prior arts will be briefly introduced. Apparently, the drawings described hereunder are only some embodiments of the present disclosure. Those skilled in the arts can obtain other drawings based on these drawings without making creative work.
FIG. 1 is a step diagram illustrating a cross-platform mapping and interaction method of a running window of a software platform according to some embodiments of the present disclosure.
FIG. 2 is a schematic diagram illustrating a webpage locally generated by a service process at a server side in cases involved in some embodiments of the present disclosure.
FIG. 3 is a diagram illustrating a configuration page by which a service process performs real-time communication with a software process based on local shared memory in cases involved in some embodiments of the present disclosure.
FIG. 4 is a schematic diagram illustrating a webpage containing a running window list in cases involved in some embodiments of the present disclosure.
FIG. 5 is a schematic diagram of displaying a screen shot image of a CAN / CAN FD Transmit running window on a webpage of a client in cases involved in some embodiments of the present disclosure.
FIG. 6 is a schematic diagram illustrating a display state of a running window after a button of the column "Send" in the first entry "EngineData" in FIG. 5 is single-clicked by the software process in cases involved in some embodiments of the present disclosure.
FIG. 7 is a schematic diagram of displaying a screen shot image of a CAN / CAN FD Transmit running window on a webpage of a client in cases involved in some embodiments of the present disclosure.
FIG. 8 is a schematic diagram of displaying an updated screen shot image of a CAN / CAN FD Transmit running window on a webpage of a client in FIG. 7 in some embodiments of the present disclosure.
FIG. 9 is a schematic diagram of editing user permission function in a remote configuration interface of a software process in cases involved in some embodiments of the present disclosure.
FIG. 10 is a schematic diagram illustrating a logging page of a webpage of a client in cases involved in some embodiments of the present disclosure.
FIG. 11 is a schematic diagram illustrating a running window list displayed after logging is made with a username admin on a webpage of a client in cases involved in some embodiments of the present disclosure.
FIG. 12 is a schematic diagram illustrating a running window list displayed after logging is made with a username user on a webpage of a client in cases involved in some embodiments of the present disclosure.
FIG. 13 is a schematic diagram of corresponding windows opened after logging is made simultaneously with username user and admin on a webpage of a client in cases involved in some embodiments of the present disclosure.
FIG. 14 is a schematic diagram illustrating a state after a software process sequentially performs corresponding user trigger instructions in cases involved in some embodiments of the present disclosure.
FIG. 15 is a block diagram illustrating a principle of a remote deployment system of a user interface of a software platform in some embodiments of the present disclosure.
FIG. 16 is a block diagram illustrating a principle of an electronic device in some embodiments of the present disclosure.
FIG. 17 is a block diagram illustrating a principle of an electronic device in some embodiments of the present disclosure.

### DETAILED DESCRIPTION OF THE EMBODIMENTS

In order to make the object, technical solutions and advantages of the embodiments of the present disclosure clearer, the technical solutions of the present disclosure will be fully and clearly described in combination with drawings. Apparently, the embodiments described herein are only some embodiments rather than all embodiments. All other embodiments obtained by those skilled in the art based on these embodiments without making creative work shall fall within the scope of protection of the present disclosure.

The current mainstream solution is to allow, by using a general remote control software, users to log onto the computer bearing the software platform remotely for viewing and operation. But this solution has the following disadvantages.

The logging requires the running window of the software platform to be in display state and display on top: this requirement leads the running window of the software platform to exclusively occupy the display, blocking other software running on desktop and affecting users' experience.

Interference of multiple users logging at the same time: in a case of multiple users logging at the same time, mutual interference occurs among mouse and keyboard operations of the computers, leading to erroneous input of data and further affecting working efficiency and accuracy.

Remote control requires unlocking of the computer: the use of remote software usually requires the computer to be in unlocked state, which increases the risk of data leakage and lowers the platform safety.

Permission cannot be divided: there are multiple windows with different permissions in the software platform. In the prior arts, it is impossible to effectively assign a different permission to each user, leading to permission conflict and potential safety hazard in the operations of users.

Therefore, at least one embodiment provides a cross-platform mapping and interaction method of a running window of a software platform, which includes the following:
an independent service process is constructed at a server side, and the service process provides HyperText Transfer Protocol (HTTP) service;
the service process performs real-time communication with at least one software process to obtain relevant information of the running window in the software process;
the service process sets a screen shot buffer zone for the running window to store a screen shot image of the running window, and sends the screen shot image of the running window to a client so that the screen shot image of the running window is displayed and published by a webpage at the client;
when the screen shot image displayed by the webpage is triggered, the service process obtains a trigger behavior through the client and generates corresponding operation instructions to the software process, so that the software process performs an operation of the running window corresponding to the screen shot image.

The cross-platform mapping and interaction method of the running window of the software platform solves the problem of failure to display and operate any running window across platforms by the conventional software platform. The new functional running window designed in the software platform can be remotely shared and controlled without secondary development. In this method, the users can access a specific function of the software platform via any terminal such as smart phone, tablet computer and working computer and the like. Those terminals as clients can participate in the control of the running window of corresponding function of the software platform without the running window in the software platform being in a display state or in a foreground display, as long as there is a browser, effectively improving the convenience and consistency of function access of the software platform.

Various non-limiting implementations of the embodiments of the present disclosure will be detailed below with the drawings.

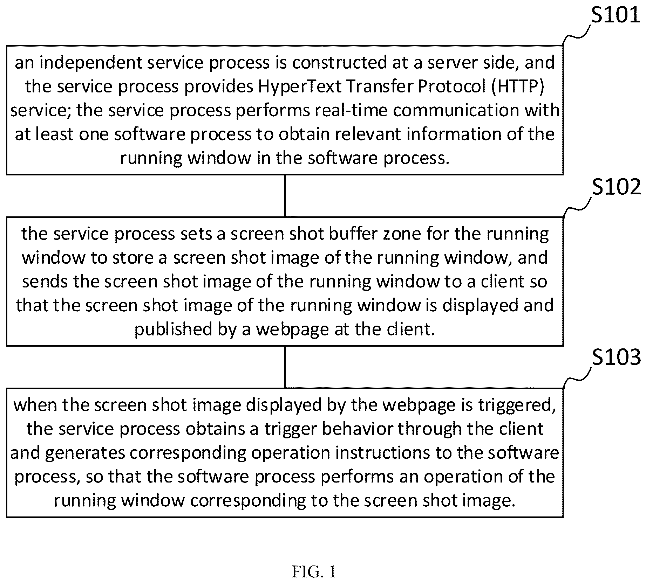

As shown in FIG. 1, some embodiments provide a cross-platform mapping and interaction method of a running window of a software platform, which includes the following steps.

At step S101, an independent service process is constructed at a server side, and the service process provides HyperText Transfer Protocol (HTTP) service; the service process performs real-time communication with at least one software process to obtain relevant information of the running window in the software process.

At step S102, the service process sets a screen shot buffer zone for the running window to store a screen shot image of the running window, and sends the screen shot image of the running window to a client so that the screen shot image of the running window is displayed and published by a webpage at the client.

At step S103, when the screen shot image displayed by the webpage is triggered, the service process obtains a trigger behavior through the client and generates corresponding operation instructions to the software process, so that the software process performs an operation of the running window corresponding to the screen shot image.

Specifically, the independent service process refers to that the service process can operate independently, for example, an executable document with suffix exe in Windows can be executed by double click without loading and executing by another program.

Specifically, the publishing refers to that the service process enables HTTP service and starts to monitor HTTP port.

Specifically, the software process in the embodiment is, for example, but not limited to, an independently-developed software platform similar in function to Matlab software platform of Mathworks or an independently-developed vehicle tool chain similar in function to CANoe software of Vector or the like.

In some embodiments, there are multiple running windows in the software process; the service process generates a webpage containing a running window list based on the relevant information, so that the webpage containing the running window list is displayed and published at the client; and, the selected running windows are fed back to the service process, and the service process sets respective screen shot buffer zones for the selected running windows to respectively store the screen shot image of each running window, and sends the screen shot image of each running window to the client, so that the screen shot image of each running window is displayed and published by corresponding webpage at the client.

The cross-platform mapping and interaction method of the running window of the software platform in this embodiment will be described in details in combination with specific case:

In this case, the cross-platform mapping and interaction method of the running window of the TSMaster software platform is taken for example.

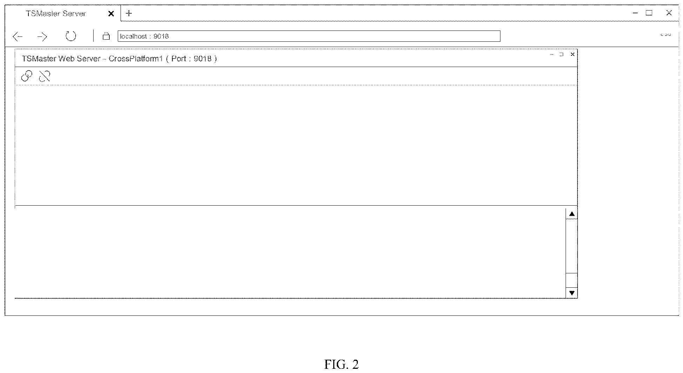

An independent service process TSMasterServer.exe is constructed at the server side, and the service process provides HTTP service through 9018 port. The user can open the webpage as shown in FIG. 2 by opening a browser on any device and inputting "http://localhost:9018/" in an address bar.

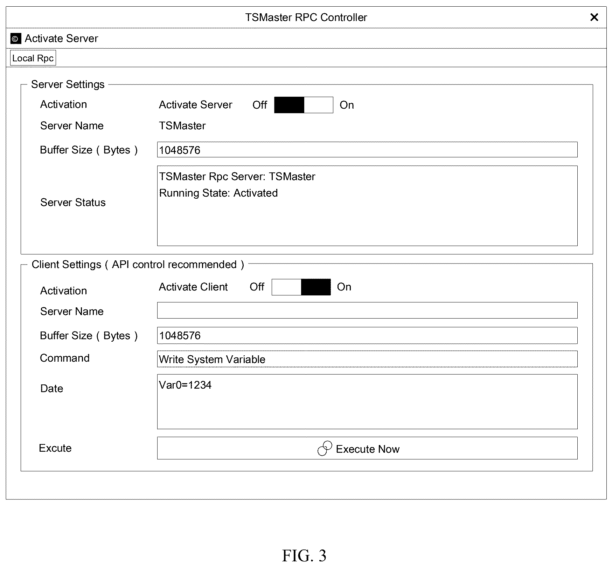

This service process performs real-time communication with the software process TSMaster64.exe based on, for example, but not limited to, local shared memory. What is shown in FIG. 3 is a configuration page of the service process based on local shared memory. When the Activate Server switch in the Server Settings is set to On, the service process can perform real-time communication with the software process.

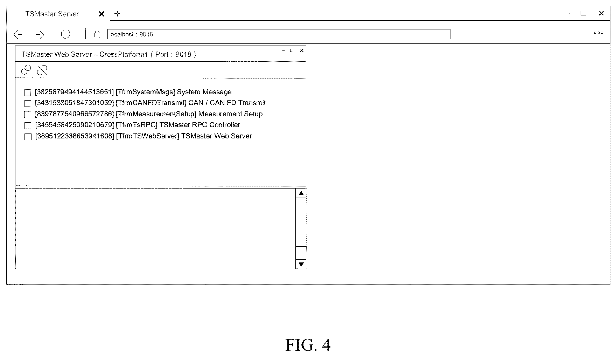

The service process obtains relevant information of the running window corresponding to the software process TSMaster64 based on the real-time communication of shared memory. In the software process, there can be multiple running windows. In this case, the service process generates a webpage containing a running window list based on the relevant information, and the running window list is displayed on the webpage opened by the client, as shown in FIG. 4.

It can be seen that there are five window entries in the window list, which respectively correspond to five running windows. There is one check box at the left of each entry. The user can tick the check box to select a running window to be displayed. For example, when the user ticks the second entry "CAN / CAN FD Transmit", the client feeds the running window corresponding to the second entry "CAN / CAN FD Transmit" back to the service process.

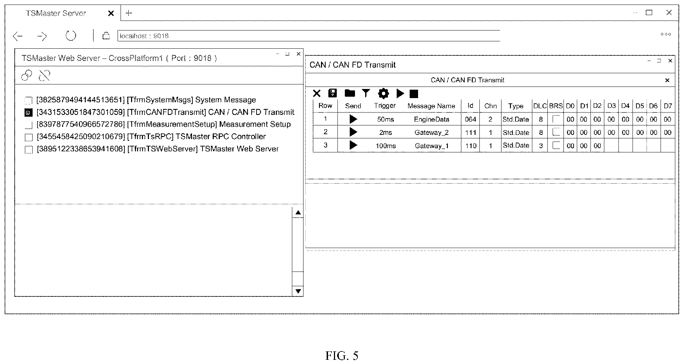

As shown in FIG. 5, the service process sets a screen shot buffer zone for the selected running window and obtains the screen shot image of the running window by the real-time communication with the software process, and sends the screen shot image to the client so that the screen shot image is displayed and published by corresponding webpage at the client.

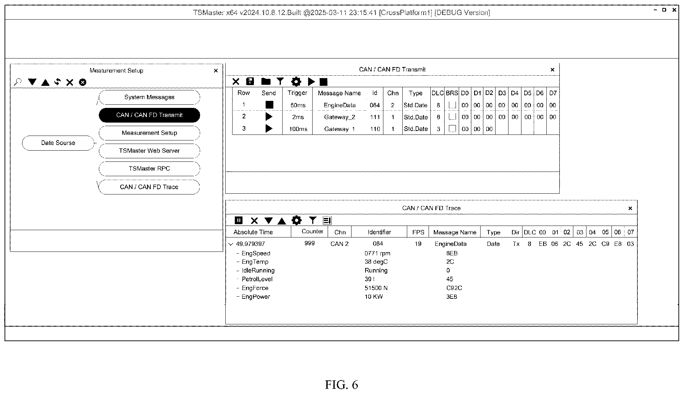

Afterwards, the service process refreshes, in real time, the screen shot image corresponding to the running window on the software process to the webpage of the client. Further, when the screen shot image displayed on the webpage of the client is triggered for operation by the user, the service process obtains a user trigger operation and generates corresponding operation instructions to the software process, so that the software process performs an operation of the running window corresponding to the screen shot image. For example, when the user moves mouse to the button of the "Send" column in the first entry "EngineData" of the "CAN / CAN FD Transmit" window, and single-clicks the mouse, the service process transmits, in real time, an operation instruction for single click on the mouse at the trigger position to the software process, so that the software process performs corresponding user mouse operation. From FIG. 6, it can be seen that in the corresponding running window of the software process, the button of the Send column of the "EngineData" entry is changed from enabled sending state to disabled sending state, which indicates the messages have already been sent periodically by the software process. It can be seen from the window "CAN / CAN FD Trace" that the messages have already been sent on bus.

In some embodiments, the cross-platform mapping and interaction method of the running window of the software platform further includes the following: the service process applies for a memory space and sets an update flag at the server side based on size information of the running window, and stores the screen shot image of the running window into the applied-for memory space; the service process obtains the screen shot image of the running window from the software process at a first time interval, and stores the screen shot image into a temporary memory space; whether contents of the applied-for memory space and the temporary memory space are same is determined by comparison to determine whether the screen shot image of the running window is to be updated; if the contents of the applied-for memory space and the temporary memory space are different, the screen shot image of the running window stored in the temporary memory space overwrites the original screen shot image in the applied-for memory space; and, the client obtains the update flag from the server side at a second time interval; if update is present, the client obtains the screen shot image in the applied-for memory space from the server side, so that the updated screen shot image of the running window is displayed and published by corresponding webpage at the client.

Specifically, the temporary memory space refers to a space for comparing the screen shot images, and can be recovered after comparison, with contents therein discarded.

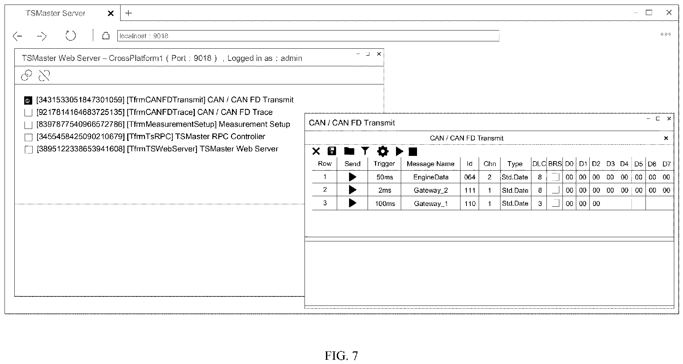

Specifically, with the previous case, detailed descriptions are made to the method in which, when the screen shot image of the running window is changed, the service process displays and publishes the updated screen shot image of the running window by corresponding webpage at the client:
For example, the user can choose to observe the running window "CAN / CAN FD Transmit" from the running window list. After the service process obtains the running window selected by the user, the service process requests screen shot information of the running window from the software process, applies for a memory space and sets an update flag at the server side based on the size information of the running window, stores the screen shot image of the running window into the applied-for memory space, and sends the screen shot image of the running window to the client, so that the screen shot image of the running window is displayed at the same position in the corresponding webpage window at the client, as shown in FIG. 7.

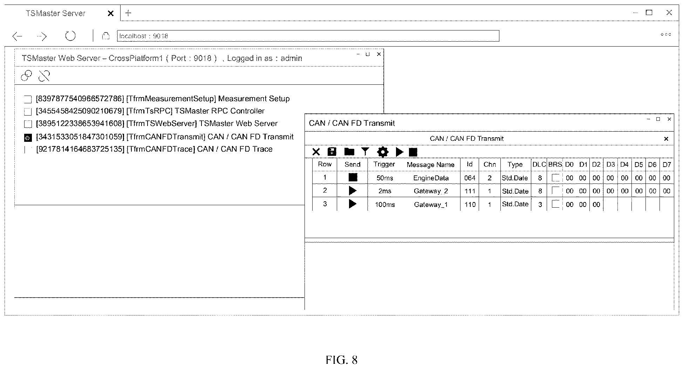

In the subsequent running process, the service process obtains the screen shot image of the running window at a first time interval, stores the screen shot image into the temporary memory space, and compares whether the contents of the applied-for memory space and the temporary memory space are same to determine whether to update the screen shot image of the running window; if the contents of the applied-for memory space and the temporary memory space are different, the screen shot image of the running window stored in the temporary memory space overwrites the original screen shot image in the applied-for memory space; and, the client obtains the update flag from the server side at a second time interval; if update is present, the client obtains the screen shot image in the applied-for memory space from the server side, so that the screen shot image is displayed by corresponding webpage window at the client. For example, the "EngineData" entry in the "CAN / CAN FD Transmit" window is set to periodic sending, namely, the button corresponding to the "Send" column is in running state, and the screen shot image is updated. The client firstly obtains the update flag and then obtains and displays the screen shot image, as shown in FIG. 8.

In some embodiments, the method in which the service process generates a webpage containing a running window list based on the relevant information so that the webpage containing the running window list is displayed and published at the client, includes the following: the client sends a webpage access request to the service process; the service process creates a session module corresponding to the webpage based on the access request; the session module screens the running window list of the service process based on permission information and displays the screened running window list at the client.

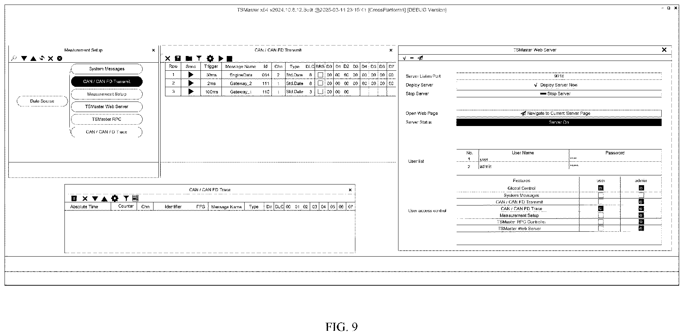

With specific case, detailed descriptions are made to the method in which the service process generates a webpage containing a running window list based on the relevant information so that the webpage containing the running window list is displayed and published at the client:
In the remote configuration page of the software process, the "activate user permission" function is ticked to edit a user list and a user permission control list. In the user list, users can be added or removed and a password for each user is configured; in the user permission control list, each running window is displayed and at the right of each running window, accessibility of each user for the running window can be ticked. For example, the user user is only allowed to access "Global Control" and "CAN / CAN FD Trace", and the admin user is allowed to access all running windows other than "System Messages", as shown in FIG. 9.

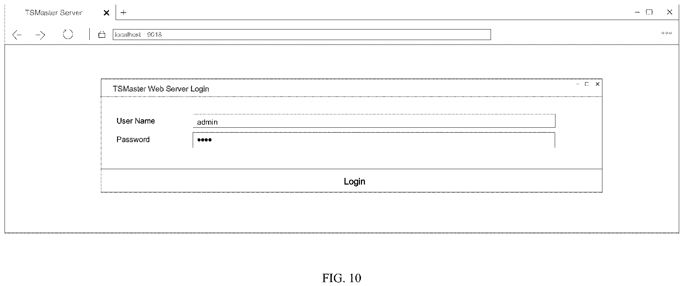

After the service process establishes connection with the software process, the service process can obtain pre-configured permission information of all users at the client. When a user at the client logs through webpage, the service process receives a webpage access request from the client, and creates a session module corresponding to the webpage based on the webpage access request to direct the user to enter a logging page, and input username and password in the logging page for logging, as shown in FIG. 10.

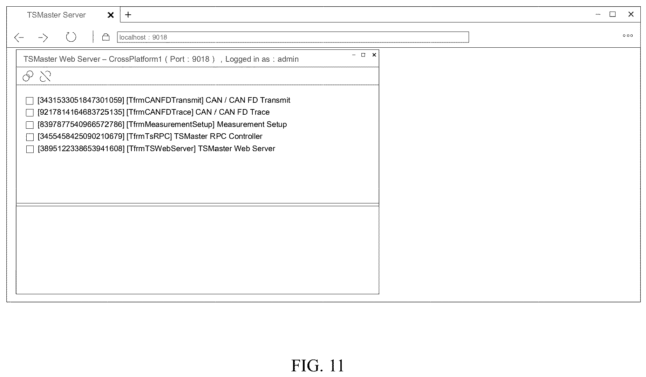

After the user successfully logs, the session module obtains the name of the current user and the permission configuration of the user. If the user logs with admin user, the session module screens the running window list of the service process based on the permission information and displays the screened running window list on the webpage of the client. Based on the permission configuration, the user can access all running windows other than "System Messages", as shown in FIG. 11.

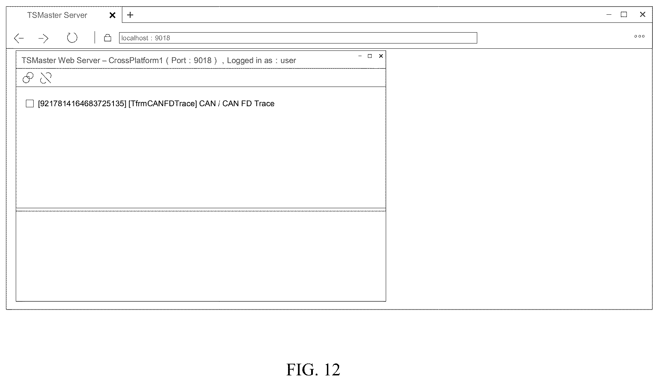

If the user logs with the user user, the user can, based on the permission configuration, only access the "Global Control" and "CAN / CAN FD Trace" windows, where the "Global Control" is a window list, as shown in FIG. 12.

In some embodiments, the screen shot images displayed by the webpage can be triggered at the same time; a method of responding to multiple trigger behaviors performed simultaneously includes the following: the service process collects the trigger instructions of all session modules and adds these trigger instructions into an execution queue in an order of time; the service process picks out the trigger instructions one by one from the execution queue and based on pick-out order, sends the trigger instructions to the software process for executing corresponding operations.

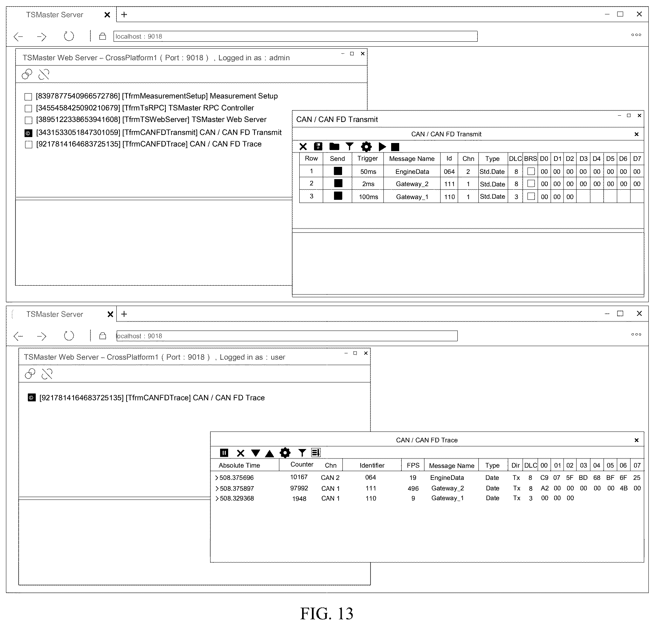

The method of responding to multiple trigger behaviors performed simultaneously will be described in details below by specific case:
For example, the user user and the user admin can log on the server side at the same time. The user user opens the "CAN / CAN FD Trace" window and the user admin opens the "CAN / CAN FD Transmit" window, as shown in FIG. 13.

The user user ticks the function of "display messages in an order of time" in the "CAN / CAN FD Trace" window; the user admin clicks the button of "stop sending all messages" in the "CAN / CAN FD Transmit" window. If the two users operate at the same time, the service process collects the user trigger instructions of the two session modules and adds the user trigger instructions into an execution queue in an order of time.

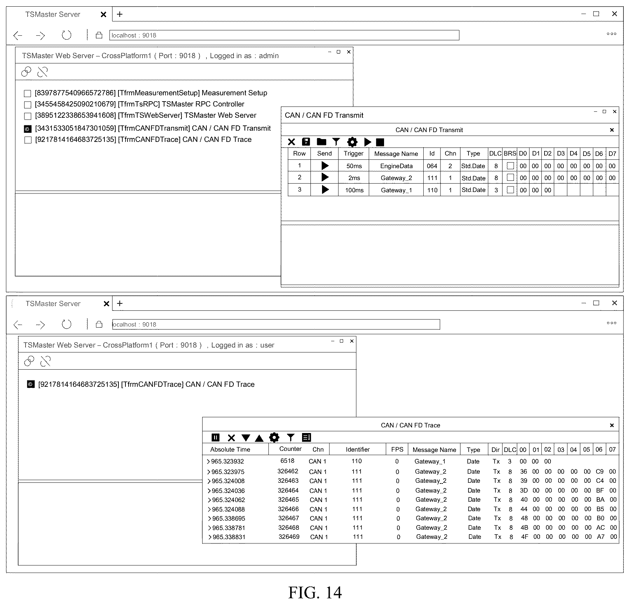

For example, if the trigger instruction of the user user is first added into the execution queue and then the trigger instruction of the user admin is added, the service process first picks out the trigger instruction of the user user from the execution queue, and then picks out the trigger instruction of the user admin, and sends them to the software process in a pick-out order for executing corresponding user trigger instructions. The final effect is that the function of "display messages in an order of time" in the "CAN / CAN FD Trace" window is first ticked and then all periodically-sent messages in the "CAN / CAN FD Transmit" window are stopped, as shown in FIG. 14.

In some embodiments, the relevant information of the running window includes: position information of window, unique identifier, window class name, window name, and window permission.

Specifically, the relevant information of the running window refers to the basic information of the functions designed in the software platform and the runnable running windows, such as position information of window, unique identifier, window class name, window name, and window permission.

In some embodiments, the service process creates one session module for each webpage; when the webpage is closed, the corresponding session module is deleted.

In some embodiments, the service process performs real-time communication with the software platform process by one or more of pipeline communication, shared memory communication, socket communication and message queue communication.

Specifically, the method of the pipeline communication includes the following:
Pipeline creation: a specific system is used to call and create one pipeline; one end of the pipeline is used for reading (reading end), and the other end is used for writing (writing end); process association: each process for communication is associated with the reading end and the writing end of the pipeline; data writing: the data sending process writes data into the writing end of the pipeline; data reading: the data receiving process reads data from the reading end of the pipeline; pipeline closing: when the communication is ended, the relevant process closes the reading end and the writing end of the pipeline to release resources.

Specifically, the method of the shared memory communication includes the following:
Shared memory creation: one process uses a system to call and create one shared memory area; shared memory mapping: each process to access the shared memory maps the shared memory into its own address space by system call; data interaction: synchronization mechanisms such as semaphore and mutex and the like are used to coordinate the access of multiple processes to the shared memory; unmapping: when the process no longer accesses the shared memory, the shared memory is unmapped from its own address space by system call; shared memory deletion: after all processes complete access to the shared memory, the shared memory is deleted to release system resources.

Specifically, the method of the socket communication includes the following:
the server side of the socket communication:
socket creation: the address and port are bound with TCP or UDP; TCP needs to listen for connections or accept connections; data interaction is performed; socket is closed;
the client of the socket communication:
   socket creation: TCP or UDP is used; TCP needs to connect with server; data interaction is performed; socket is closed.

Specifically, the method of the message queue communication includes the following: creating a message queue: for message storage; sending message: the message usually includes message type and specific message content; receiving message: selectively receiving based on message type, or receiving based on the principle of first in and first out; processing message: executing operations related to message content; closing the message queue: after the communication is ended, relevant process closes the message queue to release resources.

It should be noted that reference can be made to the prior arts for the specific implementation of the above communication methods, and this embodiment does not improve the above communication methods themselves.

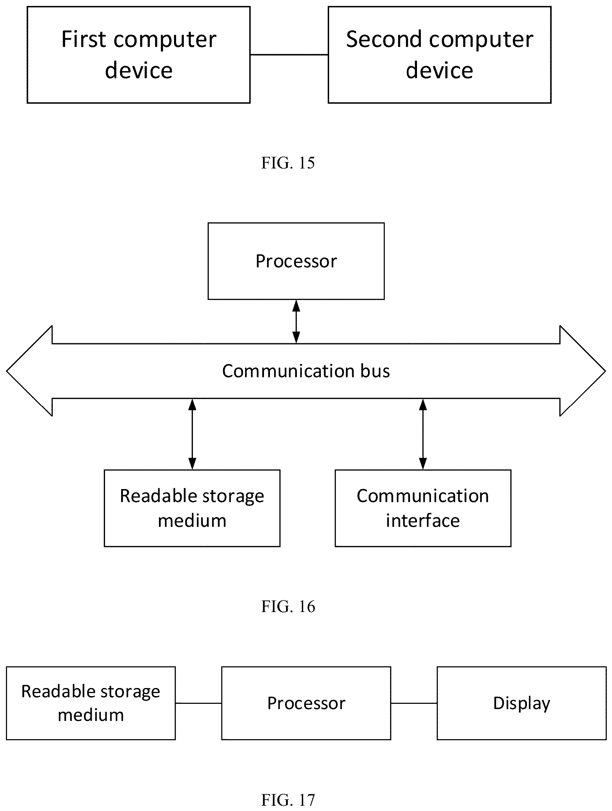

As shown in FIG. 15, some embodiments further provide a cross-platform mapping and interaction system of a running window of a software platform, which includes a first computer device and a second computer device, where,
the first computer device is configured to include:
a software process;
a service process, configured to provide HyperText Transfer Protocol (HTTP) service and perform real-time communication with at least one software process to obtain relevant information of the running window in the software process; where,
the service process sets a screen shot buffer zone for the running window to store a screen shot image of the running window, and sends the screen shot image of the running window to a client so that the screen shot image of the running window is displayed and published by a webpage at the client;
when the screen shot image displayed by the webpage is triggered, the service process obtains a trigger behavior through the client and generates corresponding operation instructions to the software process, so that the software process performs an operation of the running window corresponding to the screen shot image; and,
the second computer device is configured to include:
   a client, configured to receive the screen shot image of the running window from the service process to display and publish the screen shot image by the webpage and send the trigger behavior of the screen shot image displayed by the webpage to the service process.

The specific implementation functions of the software process, the service process and the client are implemented in the computer device. For the details, reference can be made to the contents of the above cross-platform mapping and interaction method of the running window of the software platform, and no redundant descriptions are made herein.

From the perspective of hardware processing, an electronic device in the embodiments of the present disclosure will be described below.

The embodiments of the present disclosure do not constitute limitation to the specific implementation of the electronic device.

As shown in FIG. 16, some embodiments further provide an electronic device, which includes a processor, a readable storage medium, a communication bus and a communication interface, where communication among the processor, the readable storage medium and the communication interface is carried out by the communication bus; the readable storage medium is configured to store programs for performing the cross-platform mapping and interaction method of the running window of the software platform, and the programs cause the processor to perform the operations corresponding to the cross-platform mapping and interaction method of the running window of the software platform.

As shown in FIG. 17, some embodiments further provide an electronic device, which includes:
a processor, a display communicating with the processor to present a webpage, and a readable storage medium; where,
the readable storage medium is configured to store instruction programs;
the processor is configured to execute the instruction programs to perform the following operations:
   an independent service process is constructed at a server side, and the service process provides HyperText Transfer Protocol (HTTP) service;
   the service process performs real-time communication with at least one software process to obtain relevant information of the running window in the software process;
   the service process sets a screen shot buffer zone for the running window to store a screen shot image of the running window, and sends the screen shot image of the running window to a client so that the screen shot image of the running window is displayed and published by a webpage at the client;
   when the screen shot image displayed by the webpage is triggered, the service process obtains a trigger behavior through the client and generates corresponding operation instructions to the software process, so that the software process performs an operation of the running window corresponding to the screen shot image; and,
   the display is configured to display a webpage containing a running window list and a screen shot image of the corresponding running window.

In some embodiments, a computer device (e.g., an industrial personal computer (IPC)) may be one type of electronic device and may serve as a server.

FIGS. 16 and 17 show a schematic structural view of an electronic device, provided for illustration only and not intended to limit the electronic device. The electronic device may include fewer or more components than those shown, may combine components, or may employ different component arrangements.

In some embodiments, the communication interface may include physical interfaces such as RS-232, RS-485, and USB (including Type-C) for connecting external devices or bus adapters. The communication interface may further include wired network interfaces such as Ethernet and/or wireless network interfaces such as Wi-Fi and Bluetooth, for establishing communication links between the computer device and other electronic devices.

In some embodiments, examples of the non-transitory computer-readable storage medium include, without limitation, flash memory, hard disk drives, magnetic memory, magnetic disks, optical disks, and card-type memory (e.g., MultiMediaCard (MMC), Secure Digital (SD) memory, etc.). In certain embodiments, the storage medium may be an internal storage unit of the computer device, such as a built-in hard disk drive; in other embodiments, it may be an external storage device, such as a pluggable hard disk drive, a SmartMedia card (SMC), an SD card, or a flash memory card. Furthermore, the storage medium may include both an internal storage unit and an external storage device at the same time. The storage medium may be used to store application software installed on the computer device and various data (e.g., computer program code), and to temporarily store data that have been or are to be output.

In some embodiments, the processor may be a central processing unit (CPU), a controller, a microcontroller, a microprocessor, or another data-processing chip, and is configured to execute program code stored in the storage medium and/or to process data (e.g., to execute a computer program).

In some embodiments, the communication bus may be an input/output (I/O) bus, such as a Peripheral Component Interconnect (PCI) bus or an Extended Industry Standard Architecture (EISA) bus. The bus may be divided into an address bus, a data bus, and a control bus.

Optionally, the computer device further includes a user interface. The user interface may include a display, an input unit (e.g., a keyboard), and standard wired and/or wireless interfaces. Optionally, the display (or display module) may be a light-emitting diode (LED) display, a liquid crystal display (LCD), a touchscreen LCD, or an organic light-emitting diode (OLED) display. The display (or display module), also referred to as a display screen or display unit, is used to present information processed by the computer device and to provide a visual user interface.

The processor executes the programs to perform the steps in the embodiments of the cross-platform mapping and interaction method of the running window of the software platform shown, for example, the step diagram in FIG. 1. Alternatively, the processor executes computer programs to implement the functions of each module or unit in each apparatus embodiment.

Some embodiments further provide a non-transitory computer-readable storage medium, storing computer-readable instructions. The instructions are executed by at least one processor to perform the cross-platform mapping and interaction method; the cross-platform mapping and interaction method includes the following: an independent service process is constructed at a server side, and the service process provides HyperText Transfer Protocol (HTTP) service; the service process performs real-time communication with at least one software process to obtain relevant information of the running window in the software process; the service process sets a screen shot buffer zone for the running window to store a screen shot image of the running window, and sends the screen shot image of the running window to a client so that the screen shot image of the running window is displayed and published by a webpage at the client; when the screen shot image displayed by the webpage is triggered, the service process obtains a trigger behavior through the client and generates corresponding operation instructions to the software process, so that the software process performs an operation of the running window corresponding to the screen shot image.

Some embodiments further provide a non-transitory computer-readable storage medium, storing computer-readable instructions. The instructions are executed by at least one processor to perform the above cross-platform mapping and interaction method, which specifically includes the following:
an independent service process is constructed at a server side, and the service process provides HyperText Transfer Protocol (HTTP) service;
the service process performs real-time communication with at least one software process to obtain relevant information of the running window in the software process;
the service process sets a screen shot buffer zone for the running window to store a screen shot image of the running window, and sends the screen shot image of the running window to a client so that the screen shot image of the running window is displayed and published by a webpage at the client;
when the screen shot image displayed by the webpage is triggered, the service process obtains a trigger behavior through the client and generates corresponding operation instructions to the software process, so that the software process performs an operation of the running window corresponding to the screen shot image.

Reference can be made to the specific descriptions of the cross-platform mapping and interaction method and no redundant descriptions are made herein.

Some embodiments further provide a computer program product, which includes programs or instructions, where the programs or instructions are executed on a computer to perform the cross-platform mapping and interaction method; the cross-platform mapping and interaction method includes the following: an independent service process is constructed at a server side, and the service process provides HyperText Transfer Protocol (HTTP) service; the service process performs real-time communication with at least one software process to obtain relevant information of the running window in the software process; the service process sets a screen shot buffer zone for the running window to store a screen shot image of the running window, and sends the screen shot image of the running window to a client so that the screen shot image of the running window is displayed and published by a webpage at the client; when the screen shot image displayed by the webpage is triggered, the service process obtains a trigger behavior through the client and generates corresponding operation instructions to the software process, so that the software process performs an operation of the running window corresponding to the screen shot image.

Some embodiments further provide a computer program product, which includes a readable storage medium storing readable program codes thereon. The readable program codes include instructions which cause at least one processor (one or more computer devices) to perform the following operations:
an independent service process is constructed at a server side, and the service process provides HyperText Transfer Protocol (HTTP) service;
the service process performs real-time communication with at least one software process to obtain relevant information of the running window in the software process;
the service process sets a screen shot buffer zone for the running window to store a screen shot image of the running window, and sends the screen shot image of the running window to a client so that the screen shot image of the running window is displayed and published by a webpage at the client;
when the screen shot image displayed by the webpage is triggered, the service process obtains a trigger behavior through the client and generates corresponding operation instructions to the software process, so that the software process performs an operation of the running window corresponding to the screen shot image.

It should be understood that, in several embodiments provided in the present disclosure, the disclosed apparatuses and methods may also be implemented in other ways. The foregoing apparatus embodiments are merely illustrative. For example, the flowcharts and block diagrams in the drawings depict possible system architectures, functions, and operations for apparatuses, methods, and computer program products according to multiple embodiments of the present disclosure. In this regard, each block in the flowcharts or block diagrams may represent a module, a program segment, or a portion of code including one or more executable instructions for implementing specified logical functions. It should also be noted that, in some alternative implementations, the functions indicated in the blocks may occur in an order different from that shown in the drawings. For instance, two consecutive blocks may be executed substantially concurrently and, at times, in the reverse order, depending on the functions involved. Furthermore, it should be noted that each block in the block diagrams and/or flowcharts, as well as combinations of blocks in the block diagrams and/or flowcharts, may be implemented by a special-purpose hardware-based system configured to perform the specified functions or acts, or by a combination of special-purpose hardware and computer instructions.

Additionally, in the embodiments of the present disclosure, the organization of the functional modules may be selected flexibly: all modules may be integrated into a single standalone unit, the modules may exist independently of one another, or at least two modules may be integrated to form a standalone unit.

When the foregoing function is implemented as a software functional module and is sold or used as a standalone product, it may be stored on a non-transitory computer-readable storage medium. In view of this, the overall technical solution of the present disclosure, as well as portions thereof that constitute improvements over the prior art, can be embodied as a software product. The software product is stored on the above storage medium and includes instructions which, when executed, cause a computer device (e.g., a personal computer, a server, or a network device) to perform some or all of the steps of the methods described in the embodiments of the present disclosure.

Based on the foregoing description of the preferred embodiments of the present disclosure, various changes and modifications may be made by those skilled in the art without departing from the technical spirit of the present disclosure. The technical scope of the present disclosure is not limited by the specification and should be determined by the scope of the claims.

## Claims

1. A cross-platform mapping and interaction method of a running window of a software platform, comprising the following:
constructing an independent service process at a server side, wherein the service process provides a HyperText Transfer Protocol (HTTP) service;
performing, by the service process, real-time communication with at least one software process to obtain relevant information of the running window in the software process;
setting, by the service process, a screen shot buffer zone for the running window to store a screen shot image of the running window, and sending the screen shot image of the running window to a client so that the screen shot image of the running window is displayed and published by a webpage at the client; and
when the screen shot image displayed by the webpage is triggered, obtaining, by the service process, a trigger behavior through the client and generating corresponding operation instructions to the software process, so that the software process performs an operation of the running window corresponding to the screen shot image.

2. The cross-platform mapping and interaction method of the running window of the software platform according to claim 1, wherein,
a method in which, when there are multiple running windows in the software process, the service process sets screen shot buffer zones for the running windows to store screen shot images of the running windows and sends the screen shot images of the running windows to the client so that the screen shot images of the running windows are displayed and published by the webpage at the client, comprises the following:
the service process generates a webpage containing a running window list based on the relevant information, and the webpage containing the running window list is displayed and published at the client; and
the selected running windows are fed back to the service process through the client, and the service process sets respective screen shot buffer zones for the selected running windows to respectively store the screen shot image of each running window, and sends the screen shot image of each running window to the client, so that the screen shot image of each running window is displayed and published by corresponding webpage at the client.

3. The cross-platform mapping and interaction method of the running window of the software platform according to claim 1, wherein the cross-platform mapping and interaction method of the running window of the software platform further comprises the following:
the service process applies for a memory space and sets an update flag at the server side based on size information of the running window, and stores the screen shot image of the running window into the applied-for memory space;
the service process obtains the screen shot image of the running window from the software process at a first time interval, and stores the screen shot image into a temporary memory space;
whether contents of the applied-for memory space and the temporary memory space are same is determined by comparison to determine whether the screen shot image of the running window is to be updated;
if the contents of the applied-for memory space and the temporary memory space are different, the screen shot image of the running window stored in the temporary memory space overwrites the original screen shot image in the applied-for memory space; and,
the client obtains the update flag from the server side at a second time interval; if update is present, the client obtains the screen shot image in the applied-for memory space from the server side, so that the updated screen shot image of the running window is displayed and published by corresponding webpage at the client.

4. The cross-platform mapping and interaction method of the running window of the software platform according to claim 1, wherein,
a method in which, when the screen shot image displayed by the webpage is triggered, the service process obtains a trigger behavior by the client and generates corresponding operation instructions to the software process, so that the software process performs an operation of the running window corresponding to the screen shot image, comprises the following:
the client feeds a trigger position or trigger instruction on the webpage back to the service process, and the service process generates corresponding operation instructions and transmits in real time the operation instructions to the software process, so that the trigger behavior is mapped to the software process, namely, the software process performs corresponding operations.

5. The cross-platform mapping and interaction method of the running window of the software platform according to claim 1, wherein,
the relevant information of the running window comprises: position information of window, unique identifier, window class name, window name, and window permission; and,
the service process creates one session module for each webpage; and after the webpage is closed, corresponding session module is deleted; and,
the service process performs real-time communication with the software platform process by one or more of pipeline communication, shared memory communication, socket communication and message queue communication.

6. The cross-platform mapping and interaction method of the running window of the software platform according to claim 1, wherein,
a method in which the service process generates the webpage containing the running window list based on the relevant information so that the webpage containing the running window list is displayed and published at the client, comprises the following:
the client sends a webpage access request to the service process;
the service process creates a session module corresponding to the webpage based on the webpage access request; and
the session module screens the running window list of the service process based on permission information and displays the screened running window list at the client; or,
the screen shot images displayed by the webpage are triggered simultaneously; wherein,
a method of responding to multiple trigger behaviors performed simultaneously comprises the following:
the service process collects the trigger instructions of all session modules and adds these trigger instructions into an execution queue in an order of time; and
the service process picks out the trigger instructions one by one from the execution queue and based on pick-out order, sends the trigger instructions to the software process for executing corresponding operations.

7. A cross-platform mapping and interaction system of a running window of a software platform, comprising: a first computer device and a second computer device, wherein,
the first computer device is configured to comprise:
a software process;
a service process, configured to provide a HyperText Transfer Protocol (HTTP) service and perform real-time communication with the software process to obtain relevant information of the running window in the software process; wherein,
the service process sets a screen shot buffer zone for the running window to store a screen shot image of the running window, and sends the screen shot image of the running window to a client so that the screen shot image of the running window is displayed and published by a webpage at the client;
when the screen shot image displayed by the webpage is triggered, the service process obtains a trigger behavior through the client and generates corresponding operation instructions to the software process, so that the software process performs an operation of the running window corresponding to the screen shot image; and
the second computer device is configured to comprise:
the client, configured to receive the screen shot image of the running window from the service process to display and publish the screen shot image by the webpage and send the trigger behavior of the screen shot image displayed by the webpage to the service process.

8. The cross-platform mapping and interaction system according to claim 7, wherein,
the first computer device is further configured such that: when there are multiple running windows in the software process, the service process sets screen shot buffer zones for the running windows to store screen shot images of the running windows and sends the screen shot images of the running windows to the client so that the screen shot images of the running windows are displayed and published by the webpage at the client; namely,
the service process generates a webpage containing a running window list based on the relevant information, and the webpage containing the running window list is displayed and published at the client; and
the selected running windows are fed back to the service process through the client, and the service process sets respective screen shot buffer zones for the selected running windows to respectively store the screen shot image of each running window, and sends the screen shot image of each running window to the client.

9. The cross-platform mapping and interaction system according to claim 7, wherein,
the first computer device is further configured such that:
the service process applies for a memory space and sets an update flag at a server side based on size information of the running window, and stores the screen shot image of the running window into the applied-for memory space;
the service process obtains the screen shot image of the running window from the software process at a first time interval, and stores the screen shot image into a temporary memory space;
whether contents of the applied-for memory space and the temporary memory space are same is determined by comparison to determine whether the screen shot image of the running window is to be updated; and
if the contents of the applied-for memory space and the temporary memory space are different, the screen shot image of the running window stored in the temporary memory space overwrites the original screen shot image in the applied-for memory space.

10. The cross-platform mapping and interaction system according to claim 7, wherein,
the first computer device is further configured such that:
the service process receives a trigger position or trigger instruction on the webpage from the client, and the service process generates corresponding operation instructions and transmits in real time the operation instructions to the software process, so that the trigger behavior is mapped to the software process, namely, the software process performs corresponding operations.

11. The cross-platform mapping and interaction system according to claim 7, wherein,
the relevant information of the running window comprises: position information of window, unique identifier, window class name, window name, and window permission; and,
the service process creates one session module for each webpage; and after the webpage is closed, corresponding session module is deleted.

12. The cross-platform mapping and interaction system according to claim 7, wherein,
the first computer device is further configured such that:
the service process receives a webpage access request from the client;
the service process creates a session module corresponding to the webpage based on the webpage access request;
the session module screens the running window list of the service process based on permission information and displays the screened running window list at the client.

13. A non-transitory computer-readable storage medium, comprising instructions, wherein when executed by a processor, the instructions allow the processor to perform the cross-platform mapping and interaction method of any of claims 1-6.

14. An electronic device, comprising:
a non-transitory computer-readable storage medium;
a processor;
wherein the non-transitory computer-readable storage medium stores instructions, wherein when executed by the processor, the instructions allow the processor to perform the cross-platform mapping and interaction method of any of claims 1-6.

15. A computer program product embodied in a non-transitory computer-readable storage medium, comprising instructions, wherein when executed by a processor, the instructions allow the processor to perform the cross-platform mapping and interaction method of any of claims 1-6.
